# FASCICULE DE BREVET EUROPEEN

(11) **EP 4 062 120 B1**
(45) Date de publication et mention de la délivrance du brevet: **23.08.2023**
(21) Numéro de dépôt: 20823909.5
(22) Date de dépôt: 18.11.2020
(51) Int. Cl.: F28D 20/00

(54) **SYSTÈME DE GESTION THERMIQUE POUR COMPOSANT ÉLECTRIQUE**
THERMISCHES MANAGEMENTSYSTEM FÜR EINE ELEKTRISCHE KOMPONENTE
THERMAL MANAGEMENT SYSTEM FOR AN ELECTRIC COMPONENT

(30) Priorité: 20.11.2019 FR 1912981
(43) Date de publication de la demande: 28.09.2022
(73) Titulaire: VALEO SYSTEMES THERMIQUES, 78320 Le Mesnil Saint-Denis (FR)
(72) Inventeur: SONNENBERGER, Rainer, 96476 Bad Rodach (DE); SALAZAR-ALVEAR, Roque, 96476 Bad Rodach (DE); COTTET, Richard, 78322 Le Mesnil Saint Denis Cedex (FR); JOVET, Bastien, 78322 Le Mesnil Saint Denis Cedex (FR)
(74) Mandataire: Valeo Systèmes Thermiques
(86) Numéro de dépôt international: PCT/FR2020/052121
(87) Numéro de publication internationale: WO 2021/099739

(56) Documents cités:
- EP-A1- 3 319 149
- DE-A1-102015 216 029
- FR-A1- 3 071 964
- US-A1- 2012 237 805

## Description

La présente invention concerne un système de gestion thermique pour composant électrique susceptible de dégager de la chaleur lors de son fonctionnement. Le système de gestion thermique de la présente invention est particulièrement adapté pour refroidir ou chauffer un dispositif de stockage d'énergie électrique, notamment une batterie électrique destinée à équiper un véhicule automobile, En particulier, la présente invention se rapporte à des systèmes de gestion thermiques pour composant électrique tels que définis dans le préambule de la revendication 1, et tels que divulgués par le document FR 3 071 964.

### Domaine technique

Les éléments électroniques, que ce soient des cellules de stockage d'énergie électrique, circuits intégrés, serveurs, centres de données, etc nécessitent une régulation thermique afin de les maintenir dans leur plage de température de fonctionnement.

Dans le domaine automobile par exemple, il est connu de mettre en oeuvre des batteries électriques sous forme de modules électroniques susceptibles de dégager de la chaleur en fonctionnement. Chaque module peut comporter une pluralité de cellules électronique susceptibles de dégager de la chaleur en fonctionnement reçues dans un boîtier. Les cellules de stockage d'énergie à haute densité telles que les batteries Li-ion ont idéalement besoin de fonctionner dans une plage de température entre 20°C et 40°C, et une température trop basse impacte leur puissancealors qu'une température trop haute impacte leur durée de vie. Il est donc nécessaire de pouvoir les réguler thermiquement que ce soit pour les refroidir ou les réchauffer.

On entend par cellules unitaires, un élément électrochimique individuel muni d'une borne positive et d'une borne négative.

On entend par module de batterie, un ensemble comprenant plusieurs cellules unitaires contenues dans un boîtier, les cellules étant électriquement raccordées entre elles.

Pendant la phase de charge, le module ou cellules de batterie s'échauffent selon les conditions d'utilisation et il est connu de réguler la température au moyen d'échangeurs thermiques à plaques en contact avec les modules et dans lesquels sont réalisés des canaux de circulation d'un liquide de refroidissement.

### Technique antérieure

Dans l'optique d'augmenter la surface d'échange thermique, le document US2017176108 décrit un échangeur de chaleur pour une batterie qui comprend des premier et deuxième panneaux de transport de fluide, définissant des premier et deuxième canaux d'écoulement, les premier et deuxième panneaux de transport de fluide étant agencés en définissant un angle entre eux. L'échangeur de chaleur peut également comprendre un troisième panneau de transport de fluide définissant un troisième canal d'écoulement et étant agencé en définissant un angle par rapport au deuxième panneau de transport de fluide. L'échangeur de chaleur comprend des première et seconde plaques reliées de manière étanche ensemble le long de leurs périphéries et définissant un passage d'écoulement de fluide entre leurs zones d'écoulement de fluide centrales.

D'une manière générale, pour assurer la gestion thermique des cellules de batteries des véhicules électriques ou hybrides, un liquide caloporteur comme de l'eau glycolée est régulièrement utilisé. Ce liquide circule dans les plaques ou des tubes en contact avec les cellules, et il y a un échange thermique entre ce liquide caloporteur et les cellules.

Un risque lié à cette technologie est qu'en cas de fuite de ce liquide à l'intérieur du pack batterie, il peut se créer un défaut d'isolation électrique et sa conséquence peut aller jusqu'à un départ de feux dans le pack batterie, voire une explosion des cellules dans le pack. Pour éviter ce phénomène, certains constructeurs font le choix de n'avoir aucune connexion liquide à l'intérieur du pack batterie et optent pour une grande plaque en partie inférieure par exemple. Mais certaines architectures de pack batterie et l'augmentation des surfaces d'échanges entre les cellules et les échangeurs de refroidissement engendre une multiplication des échangeurs thermiques dans le pack et donc plusieurs connexions entre les tuyaux d'alimentation de ce liquide et les échangeurs de refroidissement.

La présente invention vise à prévenir ces risques.

### Problème technique

La présente invention vise notamment à prévenir ces risques liés à une fuite de fluide caloporteur dans le pack.

### Exposé de l'invention

Il est proposé un système de gestion thermique pour composant électrique susceptible de dégager de la chaleur lors de son fonctionnement ; notamment pour un module de stockage d'énergie électrique, comprenant :
- au moins un logement destiné à recevoir au moins un composant électrique, notamment une pluralité de tels logements disposés parallèlement;
- au moins une plaque d'échange thermique s'étendant sur au moins une partie de la surface de la face latérale du logement, ladite au moins une plaque comprenant au moins canal de fluide caloporteur entre une entrée de fluide et une sortie de fluide de ladite plaque;
- un conduit d'arrivée configuré pour alimenter la plaque en fluide caloporteur via l'entrée de fluide de la plaque et un conduit d'évacuation configuré pour évacuer du fluide caloporteur de la plaque via la sortie de fluide de la plaque,
- un boitier définissant le ou les logements et recevant la plaque d'échange thermique et les conduits d'arrivée et d'évacuation,
- une boite de collecte de fluide disposée pour collecter du fluide d'une éventuelle fuite de fluide à la jonction entre les entrée et sortie de fluide de la plaque et les conduits d'arrivée et d'évacuation associés, de manière à éviter que ce fluide de fuite ne tombe dans le boitier, notamment dans une zone contenant le au moins un composant électrique, notamment dans un fond du boitier, notamment dans la zone où sont placées des cellules de batteries, notamment dans l'un ou plusieurs des logements.

Grâce à l'invention, il est possible d'assurer que même en cas de fuite au niveau des jonctions, ou connectique, entre les entrée et sortie de fluide de la plaque et les conduits d'arrivée et d'évacuation associés, qui interviendrait dans le boitier, notamment le pack batterie, le fluide ou liquide caloporteur n'entre pas en contact avec les cellules de batterie, ce qui ne pourra donc pas créer de défaut d'isolation entre les cellules de batterie.

En d'autres termes, l'invention se propose d'éviter une fuite du liquide caloporteur grâce à la présence d'un volume, par la boite de collecte, autour des zones de connexion afin de venir collecter ce liquide en cas de fuite et ainsi éviter qu'il puisse créer un court-circuit au sein du pack batterie.

Selon l'un des aspects de l'invention, le système comporte une pluralité de plaques d'échange de chaleur, notamment disposées parallèlement les unes aux autres, avec, pour chaque plaque, des jonctions entre les conduits d'arrivée et d'évacuation de fluide et les entrées et sortie de plaque, et la boite de collecte de fluide est commune à toutes les plaques de manière à recueillir du fluide de fuite éventuelle pour toutes les jonctions associées à toutes les plaques.

Selon l'un des aspects de l'invention, la boite de collecte s'étend perpendiculairement aux plaques d'échange de chaleur, notamment à une extrémité de celles-ci.

Selon l'un des aspects de l'invention, chaque plaque comporte une partie de raccord qui comprend les entrée et sortie de fluide, cette partie de raccord s'étendant sur une partie seulement d'un côté de la plaque associée.

Selon l'un des aspects de l'invention, cette partie de raccord présente la forme d'une oreille faisant saillie sur un côté de la plaque, notamment faisant saillie sur un côté de la plaque qui est la largeur, et cette partie de raccord est disposée notamment en partie supérieure de la plaque lorsque la plaque est placée dans le système pour une utilisation normale.

Selon l'un des aspects de l'invention, la boite de collecte de fluide comporte des encoches, chacune pour recevoir une partie de raccord de l'une des plaques.

Selon l'un des aspects de l'invention, une étanchéité est prévue entre l'encoche de la boite de collecte et la partie de raccord de la plaque.

Selon l'un des aspects de l'invention, les encoches présentent une forme rectiligne et sont parallèles.

Selon l'un des aspects de l'invention, les encoches s'étendent sur une partie seulement de la hauteur de la boite de collecte. Ainsi les encoches ne s'étendent pas jusqu'au fond de la boite de collecte.

Dans une variante, la boite de collecte est disposée le long d'un bord inférieur des parties de raccord. Ainsi la boite de collecte est disposée sous les parties de raccord pour qu'en fonctionnement normal, cette boite de collecte puisse collecter du fluide de fuite qui tombe par gravité depuis les jonctions de conduits sur les plaques.

Selon l'un des aspects de l'invention, la boite de collecte s'étend depuis les parties de raccord des plaques jusqu'au pied des plaques d'échange de chaleur. Ainsi la boite de collecte s'étend sur une majeure partie de la largeur des plaques d'échange de chaleur. Ici la hauteur de la boite de collecte s'étend de manière parallèle à la largeur des plaques.

Selon l'un des aspects de l'invention, la boite de collecte comporte un fond et des parois latérales. Notamment la boite de collecte est ouverte vers le haut.

Selon l'un des aspects de l'invention, certaines parois de la boite de collecte, notamment toutes les parois latérales, sont de forme rectangulaires.

Selon l'un des aspects de l'invention, la boite de collecte comporte une matière plastique, notamment formée d'un seul tenant.

Selon l'un des aspects de l'invention, la boite est fixée au logement ou aux logements, notamment par collage, vissage sur le boitier du pack, ou encore maintenu par un clip sur le boîtier du pack par exemple.

Selon l'un des aspects de l'invention, le système comporte au moins un capteur agencé pour détecter une présence d'eau dans la boite de collecte.

Selon l'un des aspects de l'invention, ce capteur est un capteur de niveau d'eau placé dans la boite de collecte. Préférablement si la boite de collecte présente une longueur importante, deux capteurs seront positionnés à chaque extrémité longitudinale de cette boite afin de détecter une fuite du liquide quelle que soit l'inclinaison du véhicule en cas de fuite.

En variante, la boite de collecte commune à toutes les plaques d'échange thermique peut être remplacée par une multitude de boites de collecte, par exemple chaque boite de collecte étant associée à une ou deux plaques.

Ainsi, grâce à l'invention, il est possible de venir ajouter un volume pour contenir toutes les connexions des plaques afin de recueillir le liquide caloporteur en cas de fuite. Ce liquide est donc contenu dans ce volume, qui est séparé et étanche de l'autre volume dans lequel sont situés les cellules de batterie. Une étanchéité est appliquée autour de la jonction entre les plaques de refroidissement et le volume grâce par exemple à une lèvre souple ou un joint rapporté comme un joint silicone par exemple.

Par ailleurs il est possible de positionner un capteur pour détecter la présence du liquide caloporteur dans le volume de collecte du liquide colporteur afin de pouvoir remonter l'information, par exemple à l'ordinateur de bord du véhicule, qu'il y a une fuite de liquide caloporteur au niveau d'une des connexions des échangeurs thermiques, notamment des plaques. Cette information peut circuler dans un réseau d'information du véhicule afin d'afficher un voyant de défaut pour prévenir d'une maintenance à réaliser.

En variante il est possible d'ajouter plusieurs capteurs de niveau, au moins deux, afin d'évaluer le débit de fuite au niveau dans la boite de collecte afin de permettre au véhicule de fonctionner dans un mode dégradé entre la première détection de la fuite et ce jusqu'au niveau maximum du fluide dans la boite de collecte à partir duquel le véhicule doit être mis en sécurité et ne peut plus être utilisé.

Selon un mode de réalisation de l'invention, ladite au moins une plaque forme une surface de contact verticale avec une surface d'échange thermique verticale du composant électrique à refroidir, lorsque celui-ci est placé dans le logement.

Selon un mode de réalisation de l'invention dans lequel le système de gestion thermique comprend au moins une plaque positionnée entre deux plaques d'extrémité, l'entrée principale du conduit d'arrivée est positionnée sur l'entrée de fluide de l'une des plaques d'extrémité de la rangée et la sortie principales est positionnée sur la sortie de l'autre plaque d'extrémité de la rangée.

Les caractéristiques exposées dans les paragraphes suivants peuvent, optionnellement, être mises en œuvre. Elles peuvent être mises en œuvre indépendamment les unes des autres ou en combinaison les unes avec les autres :- lesdits conduits d'arrivée et d'évacuation sont parallèles entre eux et s'étendent transversalement par rapport aux canaux sur au moins une partie d'une face latérale transversale,
- ladite au moins une plaque comprend une première série de canaux de fluide s'étendant dans un premier plan et une seconde série de canaux de fluide s'étendant dans un second plan distinct du premier plan, chacun des canaux de la première série étant en communication avec un canal voisin de la seconde série pour former une pluralité de chemins de fluide en forme de U,
- ladite au moins une plaque comprend une bordure située en dehors d'une surface de contact de ladite plaque avec une surface d'échange thermique verticale du composant électrique à refroidir, ladite bordure comprenant une zone d'alimentation et une zone d'évacuation, lesdites zones d'alimentation et d'évacuation présentant une forme sensiblement allongée qui s'étend transversalement par rapport aux canaux,
- ladite entrée de fluide et la sortie de fluide de ladite au moins une plaque sont disposées sur la bordure de la plaque.

Selon un mode de réalisation de l'invention, la bordure de la plaque présente une forme de profil sensiblement en C afin de définir un passage pour un conduit de liaison, ledit conduit de liaison étant destiné à être connecté à la sortie principale du conduit d'évacuation ou à l'entrée principale du conduit d'arrivée de manière à placer l'entrée principale et la sortie principale d'un même côté pour être connecté à un circuit de fluide externe.

Grâce à la présence du passage, il est ainsi possible de ramener les connectiques du système de gestion thermique d'un même côté afin de s'adapter aux contraintes connectiques imposées par le circuit de fluide externe et également aux contraintes packaging afin de limiter le volume d'occupation du pack batterie dans le véhicule.

Selon un mode de réalisation de l'invention, ladite au moins une plaque comprend une feuille centrale interposée entre deux feuilles latérales, la feuille centrale étant pourvues de sillons sur chacune des deux faces, les trois feuilles étant assemblées ensemble pour former alternativement les canaux de la première série et les canaux de la seconde série.

Selon un mode de réalisation particulièrement avantageux de l'invention dans lequel le système comprend au moins une plaque positionnée entre deux plaques d'extrémité, lesdites plaques d'extrémité étant munies chacune d'une connexion traversante et d'une connexion non traversante, ladite connexion non traversante présentant une section de passage ajustée pour réduire le débit du fluide caloporteur dans lesdites plaques d'extrémité.

Une connexion traversante est une connexion qui comprend deux embouts de raccordement s'étendant de part et d'autre de la plaque au niveau de l'entrée de fluide ou de la sortie de fluide de manière à réaliser un passage fluidique au travers de la plaque et connecté à un réservoir d'alimentation de la plaque ou à un réservoir d'évacuation de la plaque.

Une connexion non traversante est une connexion qui comprend un unique embout de raccordement qui s'étend à partir d'une face de la plaque pour réaliser un passage fluidique entre le réservoir d'alimentation de la plaque et un conduit d'alimentation, ou le réservoir d'évacuation de la plaque et un conduit d'évacuation.

Ainsi, il est possible d'augmenter les pertes de charge au niveau des plaques d'extrémités pour adapter le débit du fluide caloporteur à la puissance thermique dissipée au niveau de ces plaques d'extrémité. En effet, les plaques d'extrémité de la rangée sont en contact avec un composant électrique à refroidir d'un seul côté. Ainsi les plaques d'extrémité vont échanger deux fois moins de puissance thermique que les plaques positionnées au centre du pack. En réduisant le débit du fluide caloporteur dans ces plaques d'extrémité, il est donc possible de conserver la température la plus homogène possible pour tous les composants électriques.

Selon un mode de réalisation de l'invention, la connexion non traversante comprend un embout de raccordement fluidique s'étendant à partir d'une face de ladite plaque d'extrémité et rapporté à ladite plaque d'extrémité au niveau de l'entrée de fluide ou de la sortie de fluide, ledit embout de raccordement fluidique présentant un diamètre interne rétréci par rapport à un embout de raccordement d'une connexion traversante de manière à réduire le débit du fluide caloporteur dans ladite plaque d'extrémité.

Selon un autre mode de réalisation de l'invention, la connexion non traversante comprend une déformation sur une des faces de la plaque d'extrémité opposée à la face à partir de laquelle s'étend un embout de raccordement formant l'entrée de fluide ou la sortie de fluide de la connexion non traversante, ledit enfoncement étant configuré de manière à réduire le débit du fluide caloporteur dans ladite plaque d'extrémité. Ledit enfoncement peut être une déformation seulement de la feuille latérale ne portant pas l'embout de raccordement de la connexion non traversante ou encore de cette même feuille latérale ainsi que la feuille intermédiaire. Ledit enfoncement peut être formé par exemple par emboutissage.

Selon un mode de réalisation de l'invention et pour augmenter les surfaces d'échanges thermiques avec les composants électrique, le système de gestion thermique comprend en outre une plaque comprenant une pluralité de canaux de fluide caloporteur s'étendant sur au moins une partie de la surface de la face de fond pour former une surface de contact avec une surface d'échange thermique horizontale du composant électrique à refroidir, lorsque celui-ci est placé dans le logement.

Selon un mode de réalisation de l'invention, le conduit d'arrivée et le conduit d'évacuation sont formés d'une pluralité de tubulures, les extrémités de chacune des tubulures étant munies d'un embout de raccordement fluidique configuré pour être connecté à un embout de raccordement fluidique d'une connexion traversante ou non traversante d'une plaque au niveau de l'entrée de fluide et de la sortie de fluide.

Selon un aspect de l'invention, l'invention concerne un pack batterie équipé d'un système de gestion thermique tel que défini ci-dessus, ledit pack comprenant au moins un module de stockage d'énergie électrique reçu dans le logement.

### Brève description des dessins

D'autres caractéristiques, détails et avantages de l'invention apparaîtront à la lecture de la description détaillée ci-après, et à l'analyse des dessins annexés, sur lesquels :
**Fig. 1**

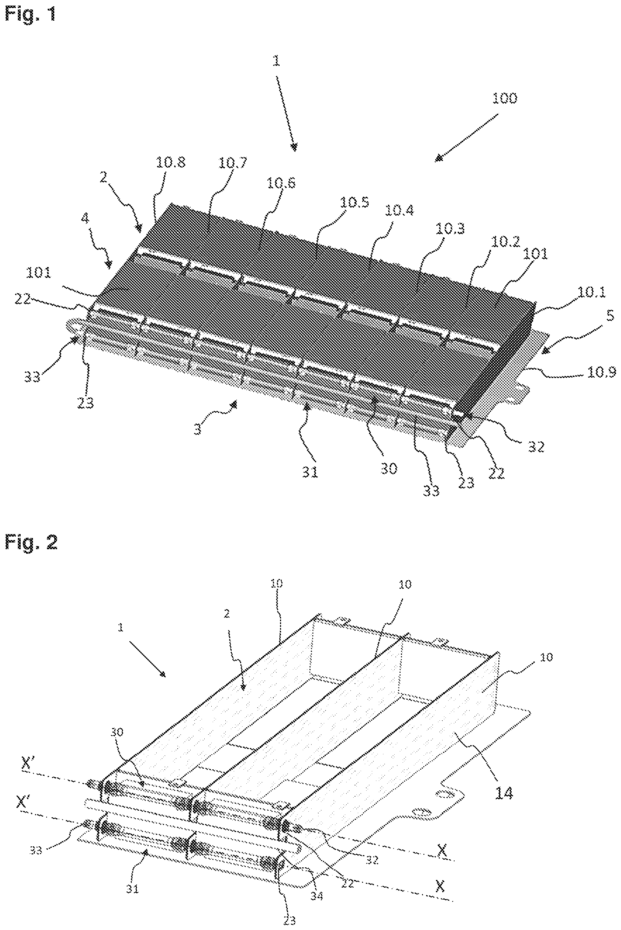

   [Fig. 1] représente schématiquement une vue en perspective d'un pack batterie équipé d'un dispositif de refroidissement;
**Fig. 2**
   [Fig. 2] représente schématiquement une vue en perspective d'une partie du dispositif de refroidissement de la figure 1 sans les modules de stockage d'énergie électrique ;
**Fig. 3**

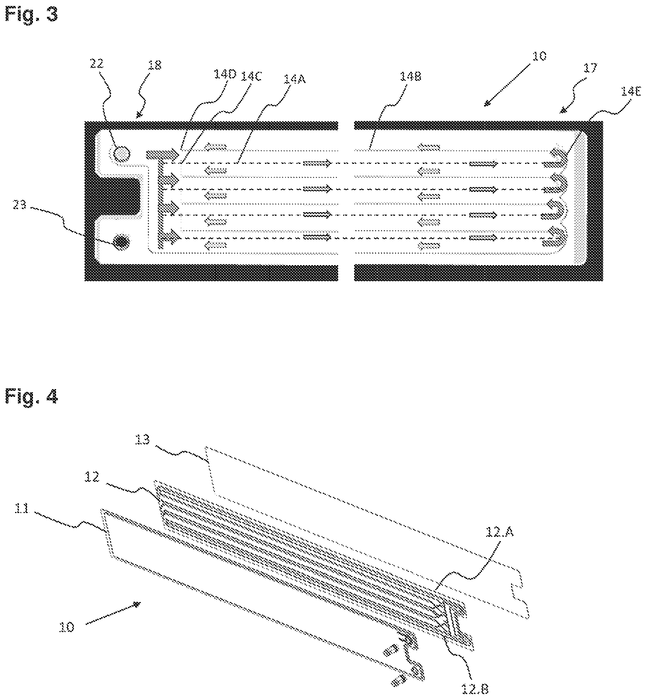

   [Fig. 3] représente schématiquement le sens de la circulation du fluide caloporteur dans une plaque de la figure 2;
**Fig. 4**
   [Fig. 4] représente schématiquement une vue éclatée d'une plaque de canaux de fluide caloporteur de la figure 3;
**Fig. 5**

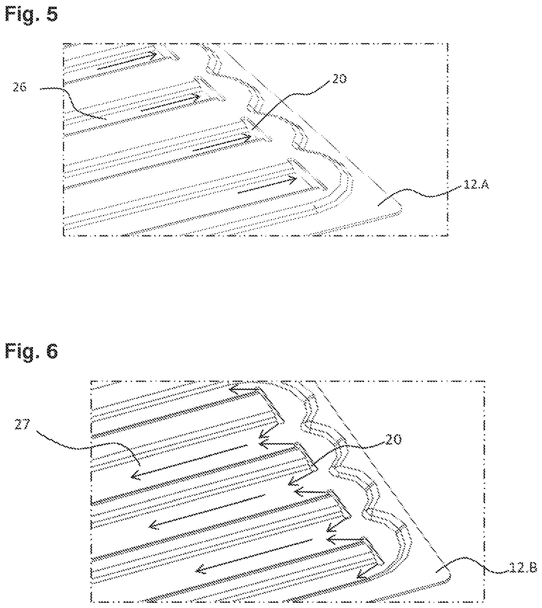

   [Fig. 5] représente une vue agrandie en perspective d'une zone de communication entre la première série de canaux et la seconde série de canaux depuis une vue du côté de la première série de canaux ;
**Fig. 6**
   [Fig. 6] représente une vue agrandie en perspective d'une zone de communication entre la première série de canaux et la seconde série de canaux depuis une vue du côté de la seconde série de canaux ;
**Fig.7**

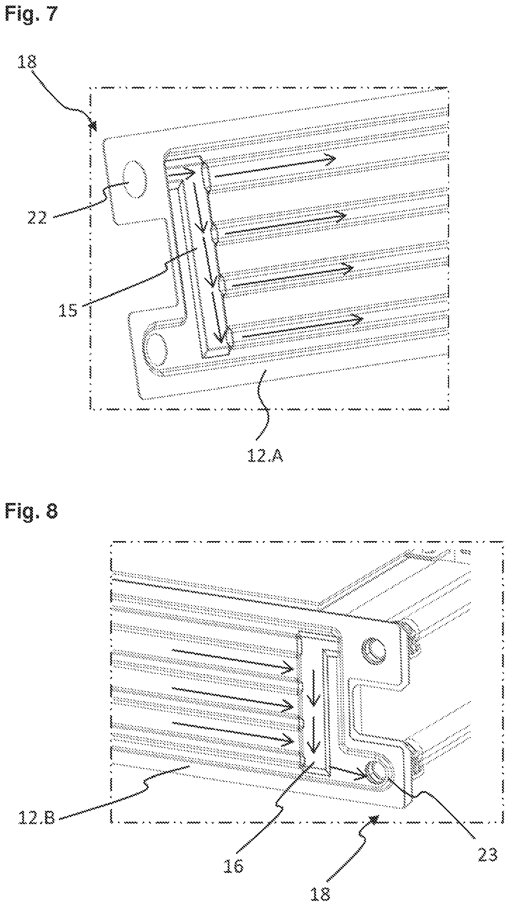

   [Fig. 7] représente une vue agrandie en perspective d'une zone d'alimentation des canaux de la plaque ;
**Fig.8**
   [Fig.8] représente une vue agrandie en perspective d'une zone d'évacuation des canaux de la plaque ;
**Fig. 9**

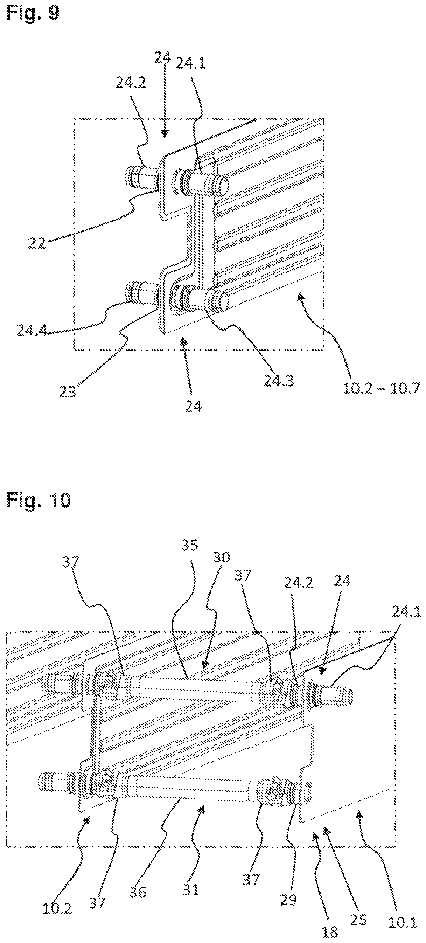

   [Fig. 9] représente une vue agrandie de l'entrée et de la sortie de fluide d'une plaque, l'entrée et la sortie étant munies d'embouts tubulaires de raccordement ;
**Fig. 10**
   [Fig. 10] représente une vue agrandie d'une zone de connexion entre deux plaques par des tubulures, l'une des deux plaques étant une plaque d'extrémité d'une rangée ;
**Fig. 11**

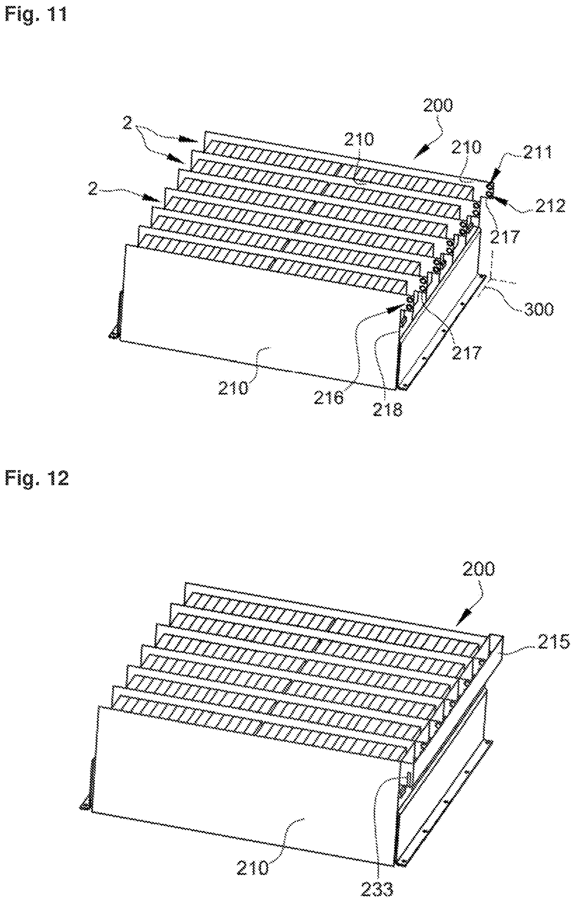

   [Fig. 11] représente un exemple de mise en œuvre de l'invention;
**Fig. 12**
   [Fig. 12] représente une vue de la figure 11 avec la boite de collecte;
**Fig. 13**
   [Fig. 13] représente la boite de collecte du système de la figure 12,
[Fig. 14] représente un autre exemple de mise en œuvre de l'invention.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Un exemple d'un système de gestion thermique pour un composant électrique susceptible de dégager de la chaleur lors de son fonctionnement est illustré sur les figures 1 et 2.

Un composant électrique 101 est par exemple un dispositif de stockage d'énergie électrique rechargeable tel qu'une batterie électrique ou un module de batterie ou une cellule électrique unitaire.

La figure 1 illustre un exemple de module électrique qui a une forme sensiblement parallélépipédique comprenant une base et des parois latérales.

Sur la figure 1, les modules 101 sont répartis sous forme de lignes de modules, notamment ligne de 2 modules pour former un pack batterie 100. Chaque module comprend une pluralité de cellules unitaires. Chaque cellule est contenue dans une enveloppe qui est réalisée dans un matériau thermiquement conducteur tel que de l'aluminium. Ainsi, chaque module 101 comprend une surface d'échange thermique horizontale et des surfaces d'échange thermique latérales. Lors du fonctlonnement de la batterie, les cellules s'échauffent, il est donc nécessaire de venir refroidir ces cellules ou le module de manière à maintenir les cellules à une température de fonctionnement optimale. En outre, il convient de refroidir de manière homogène toutes les cellules

Selon l'exemple illustré sur la figure 1, le système de gestion thermique comprend une pluralité de logements 2 délimités par une face de fond 5, deux faces latérales longitudinales 3 et une pluralité de faces latérales transversales 4. Chaque logement est configuré pour recevoir un ou plusieurs modules électriques 101, ici disposés en une ligne de deux modules.

Chaque module présente un grand côté et un petit côté. Ainsi, dans chaque ligne, les grands côtés des modules alignés forment deux surfaces latérales transversales d'échange thermique,

Le système de gestion thermique comprend une pluralité de plaques 10 d'échange thermique, chacune des plaques s'étendant sur au moins une partie de la surface latérale transversale pour former une surface de contact verticale avec la surface d'échange thermique verticale formée par les grands côté d'une ligne de modules. La plaque comprend des canaux dans lesquels circule un fluide caloporteur pour venir refroidir la ligne de modules par échange thermique.

Le fluide caloporteur utilisé est préférentiellement de l'eau glycolée, sans limitation du titre de glycol (0% à 100%). Alternativement, le fluide caloporteur peut être choisi parmi les fluides réfrigérants d'appellation.

Sur la figure 1, les faces latérales transversales 4, le fond 5 et les faces latérales longitudinales 3 forment sept logements, chaque logement étant configuré pour recevoir une ligne de deux modules. Le système de gestion thermique comprend huit plaques d'échange thermiques 10.1, 10.2, 10.3, 10.4, 10.5, 10.6, 10.7, 10.8 disposées parallèlement les unes aux autres pour former une rangée de plaques. Ainsi, chaque face latérale transversale de chaque ligne de modules est refroidie par une plaque. Comme on peut le voir sur la figure 1, les plaques d'extrémité de la rangée ou les plaques périphériques 10.1, 10.8 sont en contact avec une face latérale transversale de la ligne de modules.

De préférence, la plaque d'échange thermique 10 s'étend entièrement sur la face latérale transversale de la ligne de module.

Comme on peut le voir sur la figure 3, la plaque comprend une pluralité de canaux de fluide caloporteur 14 destinés à venir refroidir les modules. Les canaux de fluide caloporteur sont parallèles entre eux et s'étendent sensiblement sur toute la longueur de la plaque,

Un bordure de chaque plaque comprend une entrée de fluide 22 et une sortie de fluide 23.

De préférence, lorsque toutes les plaques sont alignées pour former une rangée de plaques, toutes les entrées et toutes les sorties sont alignées suivant un axe X'X comme l'illustre la figure 2.

Afin d'assurer un refroidissement homogène pour l'ensemble des modules ou cellules dans un but de réduire l'écart de température entre les cellules, les canaux de fluide caloporteur sont agencés de sorte que le sens de la circulation de fluide est alterné selon une direction verticale entre une entrée de fluide 22 et une sortie de fluide 23 de la plaque.

Le système de gestion thermique comprend un conduit d'arrivée 30 configuré pour alimenter en parallèle chacune des plaques en fluide et un conduit d'évacuation 31 configuré pour collecter conjointement le fluide à la sortie de chacune de plaques.

Le conduit d'arrivé 30 est connecté aux entrées des plaques pour alimenter en parallèle les plaques et le conduit d'évacuation est connecté aux sorties des plaques pour collecter en parallèle le fluide provenant des plaques. En outre, le conduit d'arrivée 30 et le conduit d'évacuation 31 comprennent respectivement une entrée principale 32 et une sortie principale 33 destinées à être connectée à un circuit de fluide externe au dispositif de refroidissement.

Afin de maintenir un débit du fluide caloporteur identique dans les toutes plaques, l'entrée principale 32 et la sortie principale 33 sont positionnées par rapport aux entrées 22 et sorties 23 de fluides de chacune des plaques de sorte que la longueur parcourue par le fluide caloporteur depuis l'entrée principale 32 jusqu'à la sortie principale 33 est identique pour chacune des plaques 10.

Comme l'illustre la figure 1, l'entrée principale 32 est située sur un côté du pack batterie 100 et la sortie principale 33 sur le côté opposé du pack batterie 100.

Sur l'exemple illustré sur la figure 1, l'entrée principale 32 est située sur l'entrée de la plaque périphérique 10.1 et la sortie 33 sur la sortie de la plaque périphérique 10.8. La longueur parcourue par le fluide pour chacune des huit plaques est identique.

De préférence, les conduits d'arrivée 30 et d'évacuation 31 sont parallèles entre eux et à l'axe X'X. Ils s'étendent transversalement par rapport aux canaux sur une face latérale transversale 3.

Ainsi, les conduits d'arrivée et de sortie et les plaques d'extrémité forment au moins partlellement le pourtour du pack batterie,

La plaque d'échange thermique est maintenant détaillée en référence aux figures 3 à 8.

La plaque comprend une première série de canaux 14A et une seconde série de canaux 14B. Les canaux 14A de la première série s'étendent dans un premier plan et les canaux 14B de la seconde série dans un second plan. Les deux plans sont distincts et sont parallèles à la face latérale transversale 4.

Tous les canaux sont parallèles entre eux et s'étendent sur toute la longueur de la plaque. Une extrémité de chacun des canaux 14A de la première série est en communication avec l'extrémité d'un canal voisin de la seconde série pour former une pluralité de chemins de fluide en forme de U.

De préférence, toutes les zones de communication 14E entre les canaux sont situées d'un côté 17 de la paque. Les deux autres extrémités 14C, 14D du chemin de fluide en forme de U sont situées du côté opposé 18 de la plaque. Les deux extrémités 14C et 14D forment respectivement un orifice d'entrée pour le canal d'arrivé de fluide 14A et un orifice de sortie pour le canal de sortie 14B.

L'extrémité 14C du chemin de fluide en forme de U est en communication avec une zone d'alimentation 15 et l'extrémité 14D est en communication avec une zone d'évacuation 16. Les zones d'alimentation 15 et d'évacuation 16 présentent une forme sensiblement allongée et s'étendent transversalement par rapport aux canaux 14A, 14B. Les zones d'alimentation et d'évacuation sont connectées respectivement à l'entrée 22 et à la sortie 23 de fluide.

Ainsi et comme on peut le voir sur la figure 3, le sens de la circulation du fluide dans la plaque est alterné selon une direction verticale dans la plaque, dans le sens de la hauteur de la plaque. En effet, lorsque le fluide caloporteur circule dans les canaux de la première série 14A, il se réchauffe en contact avec la surface d'échange thermique des modules. Ainsi le fluide qui circule dans les canaux de la seconde série 14B est plus chaud que le fluide qui circule dans les canaux de la première série 14A. En d'autres termes, la circulation alterne entre un canal froid et un canal chaud dans le sens de la hauteur de la plaque. Le module étant formé d'une pluralité de cellules positionnées verticalement, chaque cellule voit, en termes thermiques, le canal froid et le canal chaud du fluide caloporteur. Ainsi, la température moyenne du fluide vue par chaque cellule est la même.

En référence à la figure 4, la plaque 10 est formée à partir d'une feuille centrale 12 interposée entre deux autres feuilles latérales 11, 13. Les feuilles sont réalisées d'un seul tenant. Elles peuvent être métalliques, notamment en aluminium ou acier.

En référence aux figures 5 et 6, la feuille centrale 12 comporte une première série de sillons 26 sur une face 12A pour former les canaux 14A de la première série et une seconde série de sillons 27 sur l'autre face 128 pour former les canaux de la seconde série 14B.

La feuille centrale comprend des ouvertures 20 positionnées aux extrémités des sillons 26, 27 pour réaliser la zone de communication 14E entre les canaux 14A, 14a, permettant la circulation du fluide caloporteur d'un canal de la première série vers le cana de la seconde série. Le sens de la circulation est représenté par les flèches sur les figures 5 et 6.

En référence aux figures 7 et 8, la feuille centrale 12 comporte sur la face 12A une zone d'alimentation 15 en communication d'une part avec les orifices d'entrée des canaux 14A et d'autre part avec l'entrée de fluide 22. Sur l'autre face 12B, la feuille centrale 12 comporte une zone d'évacuation 16 en communication d'une part avec les orifices de sortie des canaux 14B et d'autre part avec la sortie de fluide 23. La zone d'alimentation et la zone d'évacuation sont situées sur un même côté 18 de la feuille centrale 12.

De préférence, la feuille centrale est obtenue d'un seul tenant par emboutissage.

Les trois faces planes 11, 12 et 13 ont sensiblement les mêmes dimensions et formes. Les faces latérales 11, 13 viennent se positionner de part et d'autre de la feuille centrale 12 et viennent fermer les sillons 26, 27 pour former les canaux. Les deux faces peuvent être soudées, collées ou assemblées par brasage sur la feuille centrale.

En référence aux figures 9 et 10, le raccordement de la zone d'alimentation 15 et de la zone d'évacuation 16 d'une plaque 10 au conduit d'arrivée 30 et au conduit d'évacuation 31 va maintenant être décrit.

Le conduit d'arrivée 30 et le conduit d'évacuation 31 sont formés à partir de l'assemblage d'une pluralité de tubulures 35, 36. Les extrémités de chaque tubulure 35, 36 sont munies d'un embout tubulaire de raccordement 37. Comme l'illustre la figure 1 et la figure 10, chacune des tubulures est positionnée entre deux plaques. Les embouts tubulaires de raccordement 37 sont connectés aux entrées 22 et aux sorties 23 des deux plaques,

La figure 9 illustre une plaque destinée à être positionnée entre deux lignes de modules telle que les plaques référencées de 10.2 à 10.7 sur la figure 1. La plaque comporte une connexion traversante au niveau de l'entrée de fluide 22 et une connexion traversante au niveau de la sortie de fluide 23.

Au niveau de l'entrée de fluide 22, la connexion traversante comprend trois orifices réalisés respectivement dans la feuille centrale (voir figures 7 et 8) et dans les feuilles latérales au niveau de la bordure 18 et agencés en regard, chacun des orifices des feuilles latérales recevant un embout tubulaire de raccordement 24.1, 24.2 qui s'étend à partir d'une face de la plaque. Une extrémité des embouts tubulaire de raccordement est connectée aux embouts de raccordement d'une tubulure 35 formant le conduit d'alimentation. Les deux embouts 24.1, 24.2 forment ainsi un passage fluidique entre deux tubulures 35 du conduit d'alimentation positionnées de part et d'autre de la plaque et également un passage fluidique avec le réservoir d'alimentation 15 de la plaque.

De manière analogue, au niveau de la sortie de fluide 23, la connexion traversante comprend trois orifices réalisés respectivement dans la feuille centrale (voir figure 7 et 8) et dans les feuilles latérales au niveau de la bordure 18 et agencés en regard, chacun des orifices recevant un embout tubulaire de raccordement 24.3, 24.4 qui s'étend à partir d'une face de la plaque. Une extrémité des embouts est connectée aux embouts de raccordement d'une tubulure 36 formant le conduit d'évacuation 31 comme l'illustre la figure 10. Les deux embouts forment ainsi un passage fluidique entre deux tubulures 36 du conduit d'évacuation positionnées de part et d'autre de la plaque et également un passage fluidique avec le réservoir d'évacuation 16 de la plaque.

La figure 10 illustre une plaque positionnée à l'extrémité de d'une rangée de plaques, à savoir la plaque 10.1 sur la figure 1 et une plaque voisine 10.2. Cette plaque d'extrémité comporte une connexion traversante 24 et une connexion non traversante 25. Sur l'exemple illustré de la figure 10, la connexion traversante 24 forme l'entrée de fluide 22 de la plaque d'extrémité 10.1 et la connexion non traversante 25 forme la sortie de fluide 23 de la plaque d'extrémité 10.1.

De manière similaire, la plaque d'extrémité 10.8 sur la figure 1 comporte également une connexion traversante 24 et une connexion non traversante 25, la connexion traversante 24 formant la sortie de fluide 23 de la plaque d'extrémité 10.8 et la connexion non traversante 25 formant l'entrée de fluide 22 de la plaque d'extrémité 10.8.

Dans l'exemple illustré sur la la figure 10, la connexion traversante 24 de la plaque d'extrémité 10.1 comprend trois orifices réalisés respectivement dans la feuille centrale (voir figures 7 et 8) et dans les feuilles latérales au niveau de la bordure 18 et agencés en regard, chacun des orifices des feuilles latérales recevant un embout tubulaire de raccordement 24.1, 24. qui s'étend à partir de chaque face de la plaque d'extrémité. Un des embouts de raccordement 24.1 forme l'entrée principale du système de gestion thermique et est connecté à un circuit de fluide externe (non illustré). L'autre embout de raccordement est connecté à un embout de raccordement 37 d'une tubulure 35 formant le conduit d'alimentation qui est connecté à l'entrée de fluide de la plaque suivante, ici sur la figure 10, c'est la plaque référencée 10.2. Les deux embouts de raccordement 24.1, 24.2 forment ainsi un passage fluidique connecté au réservoir d'alimentation 15 de la plaque d'extrémité 10.1.

Les plaques positionnées au centre du pack batterie sont en contact avec les modules positionnés de part et d'autre de ces plaques. Les plaques d'extrémités sont en contact uniquement avec les modules positionnés d'un côté de ces plaques. Ainsi les plaques d'extrémité vont échanger deux fois moins de puissance thermique que les autres plaques. Afin d'assurer une température la plus homogène possible entre les cellules, il convient de ne pas trop refroidir les modules en contact avec les plaques d'extrémité. Pour cela, il est nécessaire d'augmenter les pertes de charge du fluide au niveau de ces plaques d'extrémité et donc réduire le débit du fluide caloporteur. Plus précisément, il faut diviser par deux le débit du fluide caloporteur dans ces plaques d'extrémité 10.1, 10.8.

Pour cela, il est proposé d'ajuster la section de passage au niveau de la connexion non traversante 25 de la plaque d'extrémité pour réduire le débit du fluide caloporteur. Cette connexion non traversante 25 est située sur la sortie de fluide 23 de la plaque d'extrémité 10.1 ou sur l'entrée de fluide de la plaque d'extrémité 10.8.

On a représenté sur la figure 11 un exemple de réalisation de l'invention.

Le système de gestion thermique 200 de la figure 11 comporte une pluralité de logements 2 comme décrits ci-dessus, et des plaques d'échange thermique 210 s'étendant sur la surface de la face latérale de chaque logement 2.

Chaque plaque 210 comprend un ou plusieurs canaux de fluide caloporteur entre une entrée de fluide 211 et une sortie 212 de fluide de ladite plaque; comme décrits dans les exemples précédents.

Un conduit d'arrivée 30 configuré pour alimenter la plaque en fluide caloporteur via l'entrée 211 de fluide de la plaque et un conduit d'évacuation 31 configuré pour évacuer du fluide caloporteur de la plaque via la sortie 212 de fluide de la plaque sont prévus, à l'instar des exemples précédents et non représentés sur la figure 11.

Un boitier 300 définissant les logements 2 et recevant les plaques d'échange thermique 210 et les conduits d'arrivée et d'évacuation 30 et 31 est prévu. Ce boîtier 300 définit un pack.

Comme visible sur la figure 12, le système 200 comporte une boite de collecte de fluide 215 disposée pour collecter du fluide d'une éventuelle fuite de fluide à la jonction entre les entrée 211 et sortie 212 de fluide des plaques 210 et les conduits d'arrivée et d'évacuation associés 30 et 31, de manière à éviter que ce fluide de fuite ne tombe dans un fond du boitier 300 formant le pack batterie.

Les plaques d'échange de chaleur 210 sont disposées parallèlement les unes aux autres, avec, pour chaque plaque, des jonctions entre les conduits d'arrivée et d'évacuation 30 et 31 de fluide et les entrées 211 et sortie 212 de plaque, et la boite de collecte 215 de fluide est commune à toutes les plaques 210 de manière à recueillir du fluide de fuite éventuelle pour toutes les jonctions associées à toutes les plaques.

La boite de collecte 215 s'étend perpendiculairement aux plaques d'échange de chaleur 210, notamment à une extrémité 216 de celles-ci.

Chaque plaque 210 comporte une partie de raccord 217 qui comprend les entrée 211 et sortie 212 de fluide, cette partie de raccord 217 s'étendant sur une partie seulement d'un côté de la plaque associée 210.

Cette partie de raccord 217 présente la forme d'une oreille faisant saillie sur un côté 218 de la plaque, faisant saillie sur un côté de la plaque qui est la largeur, et cette partie de raccord 217 est disposée en partie supérieure de la plaque 210 lorsque la plaque est placée dans le système pour une utilisation normale.

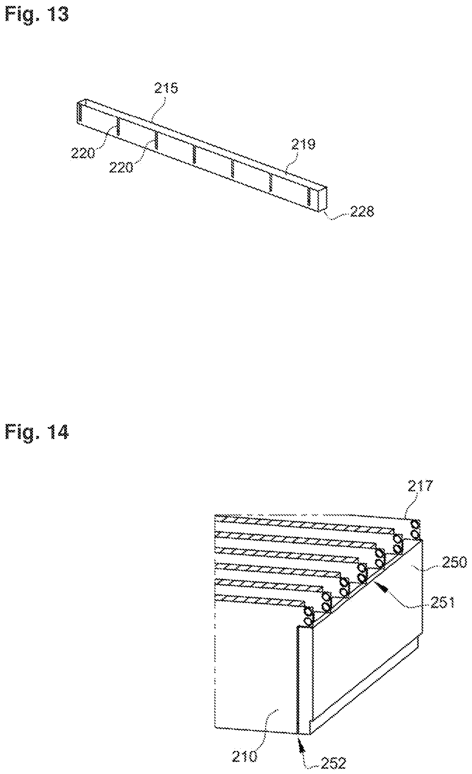

La boite de collecte de fluide 215 comporte des encoches 220, chacune pour recevoir une partie de raccord 217 de l'une des plaques, comme on peut le voir sur les figures 12 et 13.

Une étanchéité est prévue entre l'encoche 220 de la boite 215 de collecte et la partie de raccord 217 de la plaque 210, par exemple sous la forme d'un joint en silicone.

Les encoches 220 présentent une forme rectiligne et sont parallèles.

Les encoches 220 s'étendent sur une partie seulement de la hauteur de la boite de collecte 215. Ainsi les encoches 220 ne s'étendent pas jusqu'au fond de la boite de collecte. Les encoches 220 sont présentes seulement sur une face plane de la boite 215.

La boite de collecte 215 comporte un fond 218 et des parois latérales 219. La boite de collecte 215 est ouverte vers le haut.

Toutes les parois latérales 219 sont de forme rectangulaires.

La boite de collecte 215 comporte une matière plastique, notamment formée d'un seul tenant.

La boite 215 est fixée logements, notamment par collage, vissage sur le boitier du pack, ou encore maintenu par un clip sur le boitier du pack par exemple.

Le système 200 comporte au moins un capteur 233 agencé pour détecter une présence d'eau dans la boite de collecte 215.

Ce capteur 233 est un capteur de niveau d'eau placé dans la boite de collecte 215. Préférablement si la boite de collecte présente une longueur importante, deux capteurs seront positionnés à chaque extrémité longitudinale de cette boite afin de détecter une fuite du liquide quelle que soit l'inclinaison du véhicule en cas de fuite.

En variante, la boite de collecte 215 commune à toutes les plaques d'échange thermique peut être remplacée par une multitude de boites de collecte, par exemple chaque boite de collecte étant associée à une ou deux plaques.

En variante il est possible d'ajouter plusieurs capteurs de niveau 233, au moins deux positionnés dans l'axe vertical, afin d'évaluer le débit de fuite au niveau dans la boite de collecte afin de permettre au véhicule de fonctionner dans un mode dégradé entre la première détection de la fuite et ce jusqu'au niveau maximum du fluide dans la boite de collecte à partir duquel le véhicule doit être mis en sécurité et ne peut plus être utilisé.

Dans une variante illustrée sur la figure 14, la boite de collecte 250 est disposée le long d'un bord inférieur 251 des parties de raccord. Ainsi la boite de collecte 250 est disposée sous les parties 217 de raccord pour qu'en fonctionnement normal, cette boite de collecte 250 puisse collecter du fluide de fuite qui tombe par gravité depuis les jonctions de conduits 30 et 31 sur les plaques 210.

La boite de collecte 250 s'étend depuis les parties de raccord 217 des plaques 21à jusqu'au pied 252 des plaques d'échange de chaleur 210. Ainsi la boite de collecte 250 s'étend sur une majeure partie de la largeur des plaques d'échange de chaleur 210. Ici la hauteur de la boite de collecte s'étend de manière parallèle à la largeur des plaques.

## Revendications

1. Système de gestion thermique (200) pour composant électrique susceptible de dégager de la chaleur lors de son fonctionnement ; notamment pour un module de stockage d'énergie électrique, comprenant :
- au moins un logement (2) destiné à recevoir au moins un composant électrique, notamment une pluralité de tels logements disposés parallèlement;
- au moins une plaque d'échange thermique (210) s'étendant sur au moins une partie de la surface de la face latérale du logement, ladite au moins une plaque comprenant au moins un canal de fluide caloporteur entre une entrée de fluide (211) et une sortie de fluide (212) de ladite plaque (210);
- un conduit d'arrivée configuré pour alimenter la plaque en fluide caloporteur via l'entrée de fluide de la plaque et un conduit d'évacuation configuré pour évacuer du fluide caloporteur de la plaque via la sortie de fluide de la plaque,
- un boîtier (300) définissant le ou les logements et recevant la plaque d'échange thermique et les conduits d'arrivée et d'évacuation, ledit système étant **caractérisé en ce qu'**il comporte, par ailleurs,
- une boite de collecte de fluide (215) disposée pour collecter du fluide d'une éventuelle fuite de fluide à la jonction entre les entrée et sortie de fluide de la plaque et les conduits d'arrivée et d'évacuation associés, de manière à éviter que ce fluide de fuite ne tombe dans le boitier, notamment dans une zone contenant le au moins un composant électrique.

2. Système selon la revendication précédente, dans lequel le système comporte une pluralité de plaques d'échange de chaleur (210), notamment disposées parallèlement les unes aux autres, avec, pour chaque plaque, des jonctions entre les conduits d'arrivée et d'évacuation de fluide et les entrées et sortie de plaque, et dans lequel la boite de collecte de fluide (215) est commune à toutes les plaques de manière à recueillir du fluide de fuite éventuelle pour toutes les jonctions associées à toutes les plaques.

3. Système selon la revendication précédente, dans lequel la boite de collecte s'étend perpendiculairement aux plaques d'échange de chaleur (210), notamment à une extrémité de celles-ci.

4. Système selon l'une des revendications précédentes, dans lequel chaque plaque (210) comporte une partie de raccord (217) qui comprend les entrée et sortie de fluide, cette partie de raccord s'étendant sur une partie seulement d'un côté de la plaque associée.

5. Système selon la revendication précédente, dans lequel la boite de collecte de fluide comporte des encoches (220), chacune pour recevoir une partie de raccord de l'une des plaques.

6. Système selon la revendication précédente, dans lequel une étanchéité est prévue entre l'encoche de la boite de collecte et la partie de raccord de la plaque.

7. Système selon l'une des revendications précédentes, dans lequel la boite de collecte (215) comporte un fond et des parois latérales.

8. Système selon la revendication précédente, dans lequel la boite de collecte comporte une matière plastique, notamment formée d'un seul tenant.

9. Système selon l'une des revendications précédentes, dans lequel le système comporte au moins un capteur (233) agencé pour détecter une présence d'eau dans la boite de collecte.

10. Pack batterie (100) équipé d'un système de gestion thermique selon l'une des revendications précédentes, ledit pack comprenant au moins un module de stockage d'énergie électrique (101) reçu dans le logement (2).

## Patentansprüche

1. Thermisches Managementsystem (200) für eine elektrische Komponente, die bei ihrem Betrieb Wärme abgeben kann, insbesondere für ein Modul zur Speicherung elektrischer Energie, umfassend:
- mindestens eine Aufnahme (2), die dazu bestimmt ist, mindestens eine elektrische Komponente aufzunehmen, insbesondere eine Mehrzahl derartiger Aufnahmen, die parallel angeordnet sind;
- mindestens eine Wärmetauschplatte (210), die sich über mindestens einen Teil der Oberfläche der Seitenfläche der Aufnahme erstreckt, wobei die mindestens eine Platte einen Wärmeträgerfluidkanal zwischen einem Fluideinlass (211) und einem Fluidauslass (212) der Platte (210) umfasst;
- eine Zuführleitung, die dazu ausgestaltet ist, die Platte über den Fluideinlass der Platte mit Wärmeträgerfluid zu versorgen, und eine Abführleitung, die dazu ausgestaltet ist, Wärmeträgerfluid über den Fluidauslass der Platte aus der Platte abzuführen,
- ein Gehäuse (300), das die Aufnahme oder Aufnahmen definiert und die Wärmetauschplatte und die Zuführ- und Abführleitungen aufnimmt, wobei das System **dadurch gekennzeichnet ist, dass** es im Übrigen beinhaltet
- ein Fluidsammelgehäuse (215), das angeordnet ist, um Fluid einer etwaigen Fluidleckage an der Verbindungsstelle zwischen dem Fluideinlass und -auslass der Platte und den zugeordneten Zuführ- und Abführleitungen zu sammeln, so dass verhindert wird, dass dieses Leckagefluid in das Gehäuse fällt, insbesondere in einen Bereich, der die mindestens eine elektrische Komponente enthält.

2. System nach dem vorhergehenden Anspruch, bei dem das System eine Mehrzahl von Wärmetauschplatten (210) beinhaltet, die insbesondere parallel zueinander angeordnet sind, mit, für jede Platte, Verbindungsstellen zwischen den Fluidzuführ- und Fluidabführleitungen und den Platteneinlässen und -auslässen, und bei dem das Fluidsammelgehäuse (215) allen Platten gemeinsam ist, so dass etwaiges Leckagefluid für alle Verbindungsstellen, die allen Platten zugeordnet sind, aufgefangen wird.

3. System nach dem vorhergehenden Anspruch, bei dem sich das Sammelgehäuse senkrecht zu den Wärmetauschplatten (210) erstreckt, insbesondere an einem ihrer Enden.

4. System nach einem der vorhergehenden Ansprüche, bei dem jede Platte (210) ein Verbindungsteil (217) beinhaltet, das den Fluideinlass und -auslass umfasst, wobei sich dieses Verbindungsteil nur über einen Teil einer Seite der zugeordneten Platte erstreckt.

5. System nach dem vorhergehenden Anspruch, bei dem das Fluidsammelgehäuse Aussparungen (220) beinhaltet, jede, um ein Verbindungsteil einer der Platten aufzunehmen.

6. System nach dem vorhergehenden Anspruch, bei dem eine Dichtung zwischen der Aussparung des Sammelgehäuses und dem Verbindungsteil der Platte vorgesehen ist.

7. System nach einem der vorhergehenden Ansprüche, bei dem das Sammelgehäuse (215) einen Boden und Seitenwände beinhaltet.

8. System nach dem vorhergehenden Anspruch, bei dem das Sammelgehäuse einen Kunststoff beinhaltet, der insbesondere einstückig ausgebildet ist.

9. System nach einem der vorhergehenden Ansprüche, bei dem das System mindestens einen Sensor (233) beinhaltet, der dazu eingerichtet ist, ein Wasservorkommen in dem Sammelgehäuse zu detektieren.

10. Batteriepack (100), das mit einem thermischen Managementsystem nach einem der vorhergehenden Ansprüche ausgestattet ist, wobei das Pack mindestens ein Modul zur Speicherung elektrischer Energie (101) umfasst, das in der Aufnahme (2) aufgenommen ist.

## Claims

1. Thermal management system (200), for an electrical component liable to release heat during its operation, in particular for an electrical energy storage module, this system comprising:
- at least one housing (2) intended to receive at least one electrical component, notably a plurality of such housings arranged in parallel;
- at least one heat exchange plate (210) extending over at least part of the surface of the lateral face of the housing, said at least one plate comprising at least one canal for heat-transfer fluid between a fluid inlet (211) and a fluid outlet (212) of said plate (210);
- an intake duct configured to supply the plate with heat-transfer fluid via the fluid inlet of the plate and a discharge duct configured to remove the heat-transfer fluid from the plate via the fluid outlet of the plate,
- a casing (300) defining the housing or housings and receiving the heat-exchange plate and the intake and discharge ducts, said system being **characterized in that** it furthermore comprises
- a fluid collecting tank (215) arranged to collect any fluid that might leak from the junction between the fluid inlet and outlet of the plate and the associated intake and discharge ducts, so as to prevent this leaking fluid from dropping into the casing, notably into a region containing the at least one electrical component.

2. System according to the preceding claim, wherein the system comprises a plurality of heat-exchange plates (210), notably arranged parallel to one another with, for each plate, junctions between the fluid intake and discharge ducts and the plate inlet and outlet, and wherein the fluid collecting tank (215) is common to all the plates so as to collect any fluid that might be leaking from all of the junctions associated with all of the plates.

3. System according to the preceding claim, wherein the collecting tank extends perpendicular to the heat-exchange plates (210), notably at one end thereof.

4. System according to one of the preceding claims, wherein each plate (210) comprises a connecting part (217) which comprises the fluid inlet and outlet, this connecting part extending over just part of one side of the associated plate.

5. System according to the preceding claim, wherein the fluid collecting tank comprises notches (220) for each receiving a connecting part of one of the plates.

6. System according to the preceding claim, wherein there is sealing between the notch of the collecting tank and the connecting part of the plate.

7. System according to one of the preceding claims, wherein the collecting tank (215) has a bottom and lateral walls.

8. System according to the preceding claim, wherein the collecting tank contains a plastics material and is notably formed as a single piece.

9. System according to one of the preceding claims, wherein the system comprises at least one sensor (233) designed to detect the presence of water in the collecting tank.

10. Battery pack (100) equipped with a thermal management system according to one of the preceding claims, said pack comprising at least one electrical energy storage module (101) received in the housing (2).
